Europäisches Patentamt

European Patent Office

Office européen des brevets

(11) Numéro de publication : **0 378 474 B1**

(12) **FASCICULE DE BREVET EUROPEEN**

(45) Date de publication du fascicule du brevet :
**18.03.92 Bulletin 92/12**

(21) Numéro de dépôt : **90400068.4**

(22) Date de dépôt : **10.01.90**

(51) Int. Cl.⁵ : **F01D 5/30**

---

(30) Priorité : **11.01.89 FR 8900245**

(43) Date de publication de la demande :
**18.07.90 Bulletin 90/29**

(45) Mention de la délivrance du brevet :
**18.03.92 Bulletin 92/12**

(84) Etats contractants désignés :
**DE FR GB**

(56) Documents cités :
**EP-A- 0 077 236
EP-A- 0 280 246
GB-A- 848 465
GB-A- 2 097 480
US-A- 2 654 566**

(73) Titulaire : **SOCIETE NATIONALE D'ETUDE ET DE CONSTRUCTION DE MOTEURS D'AVIATION, "S.N.E.C.M.A."
2, Boulevard du Général Martial Valin
F-75015 Paris (FR)**

(72) Inventeur : **Heurtel, Bertrand Jean Joseph Marie
12, rue de L'Arc
F-77240 Vert-Saint-Denis (FR)**
Inventeur : **Mondoloni, Pierre, Louis
31, Place de la Frenaie
F-94470 Boissy Saint Leger (FR)**
Inventeur : **Serre, Jacques, René
2, allée des Pervenches, Vaux Le Penil
F-77000 Melun (FR)**

(74) Mandataire : **Moinat, François et al
S.N.E.C.M.A. Service des Brevets Boîte
Postale 81
F-91003 Evry Cédex (FR)**

(54) **Rotor de turbomachine muni d'un dispositif de fixation des aubes.**

EP 0 378 474 B1

## Description

La présente invention concerne un rotor de turbomachine muni d'un dispositif de fixation des aubes.

Divers moyens sont couramment utilisés pour assurer la fixation et la rétention radiale des aubes mobiles montées sur des roues ou rotors des turbomachines modernes à vitesses élevées de rotation. Il est notamment habituel de prévoir des aubes constituées d'une pale proprement dite dont les formes aérodynamiques assurent les performances recherchées d'un étage de compression ou de turbine, associées à une embase comportant un pied éventuellement surmonté d'une plate-forme délimitant la paroi interne de la veine de circulation des gaz. Ce pied, présentant, par exemple, une forme dite marteau ou encore en sapin, est placé dans une rainure axiale coopérante ménagée sur la jante d'un disque de roue ou sur le diamètre externe d'un tambour de rotor. Dans certains cas, le montage prévu peut également être dans un sens périphérique ou circulaire. Dans tous les cas, des moyens complémentaires assurent habituellement un verrouillage des aubes dans les différentes directions, radiale, axiale et périphérique.

Les solutions antérieures, bien connues et encore largement utilisées, notamment dans les applications aéronautiques tant dans le domaine militaire que dans le domaine civil ne sont pas toutefois pleinement satisfaisantes dans des applications aux moteurs aéronautiques de nouvelle conception, notamment celle qui associe au générateur de taz, une turbine supplémentaire de puissance à vitesse lente de rotation, destinée à entraîner soit une soufflante, soit une hélice et combinant notamment deux étages contrarotatifs. Du fait notamment de la réduction des vitesses de rotation et donc aussi du niveau de contrainte auquel les pièces en rotation sont soumises, un allègement des technologies précédemment utilisées s'avère utile. Cet objectif de légéreté s'accompagne d'une recherche de simplification, de manière notamment à rendre le montage plus aisé. Enfin, compte tenu des nouvelles conditions d'utilisation, des qualités de bon maintien des pièces à basse vitesse de rotation du rotor doivent être obtenues.

Certains éléments de solution qui se révèlent cependant insuffisants peuvent être fournis par des dispositions plus anciennes n'ayant pas atteint le degré de complexité et de sophisticiation de certaines solutions plus récentes et à l'heure actuelle mieux connues. Ainsi, US-A 2 654 565 décrit le montage d'aubes dont l'embase comporte des épaulements formant crochets associés à des fentes ménagées sur les jantes de disques assemblés pour former un rotor. Un autre exemple est décrit dans EP-A-0 077 236. US-A 3 063 674 montre l'utilisation de rivets pour la fixation d'aubes de rotor.

Conformément à l'invention, un rotor de turbomachine constituant une solution satisfaisante aux problèmes évoqués ci-dessus est caractérisé en ce que chaque plate-forme d'aube comporte sur sa face inférieure une jambe amont dont le rebord d'extrémité coopère avec une gorge annulaire ménagée dans un bourrelet annulaire amont du tambour et une jambe aval terminée par une portée cylindrique en appui sur une portée cylindrique coopérante ménagée sur le tambour et comportant, d'une part, une découpe médiane coopérant avec une languette formée sur une collerette portée par un bourrelet annulaire aval du tambour et, d'autre part, deux crochets sur la face interne desquels est ménagée une gorge recevant chacune une première languette d'une plaquette de verrouillage en forme de segment circulaire, portant à chaque extrémité une seconde languette de blocage et dont la base est placée dans une gorge annulaire ménagée du côté aval sur ledit bourrelet aval du tambour.

Avantageusement, une cale élastique ondulée est placée, respectivement, d'une part, entre le rebord de la jambe amont de la plate-forme d'aube et la face radialement inférieure de la gorge du bourrelet amont du tambour et, d'autre part, entre les portées cylindriques coopérantes de la jambe aval de la plate-forme d'aube et du bourrelet aval du tambour.

D'autres caractéristiques et avantages de l'invention seront mieux compris à la lecture de la description qui va suivre d'un mode de réalisation de l'invention, en référence aux dessins annexés, sur lesquels :

– La figure 1 représente, selon une vue partielle schématique en coupe par un plan passant par l'axe de rotation du rotor, la partie d'un rotor de turbomachine correspondant à un étage d'aubage mobile, suivant un mode de réalisation de l'invention ;

– La figure 2 représente, selon une vue schématique en perspective, une plate-forme d'aube de l'aubage représenté sur la figure 1 ;

– La figure 3 représente, selon une vue schématique en perspective, la partie du tambour de rotor correspondant à l'aubage représenté sur la figure 1;

– La figure 4 représente, selon une vue de face, une plaquette de verrouillage destinée à l'aubage représenté sur la figure 1.

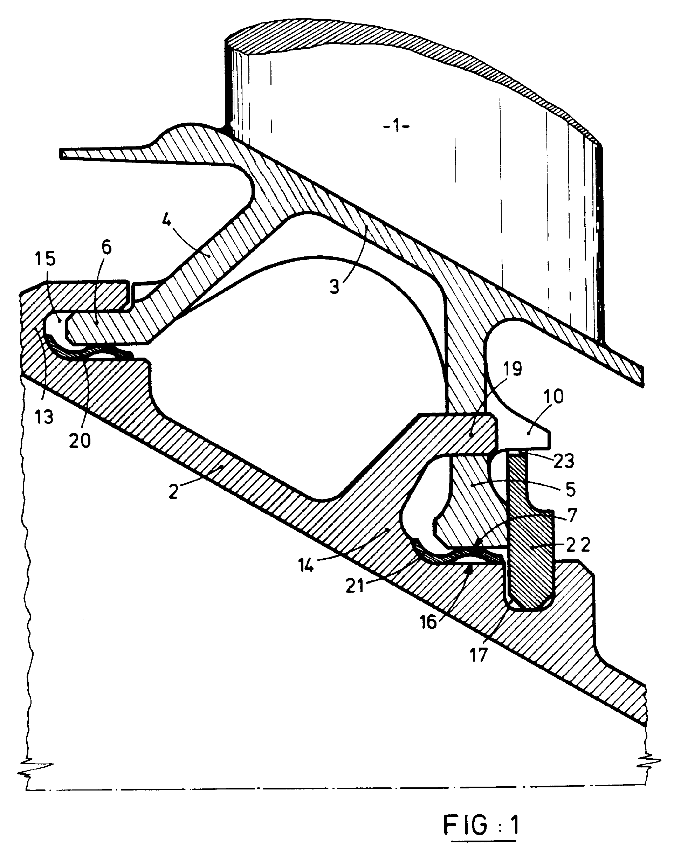

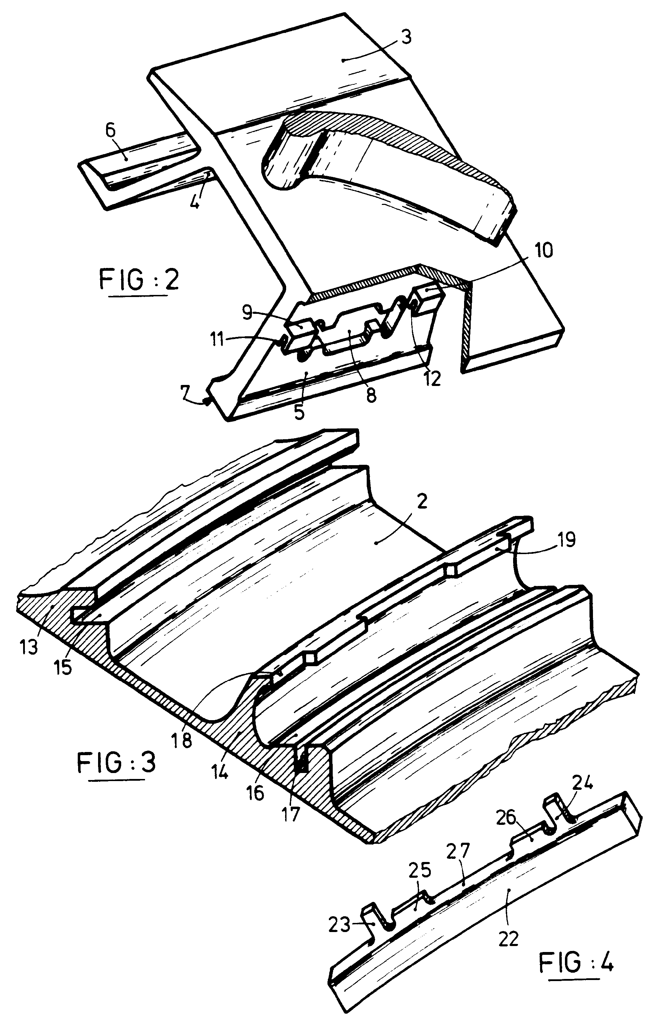

L'étage d'aubage mobile d'un rotor de turbomachine réalisé conformément à l'invention, comporte, comme représenté sur la figure 1, des aubes 1 disposées de manière régulièrement réparties et solidarisées par des moyens de fixation remarquables selon l'invention à la périphérie externe d'un tambour 2 qui comprend généralement plusieurs tels étages, un seul étant représenté sur les dessins dans un but de simplification. Comme également visible sur la figure 2, chaque plate-forme 3 d'aube comporte, sur sa face radialement inférieure, côté amont et côté aval, deux jambes d'orientation générale radiale, respectivement 4 et 5. La jambe amont 4 comporte un rebord 6 aminci d'extrémité formant un crochet. La jambe aval 5 est terminée par une portée cylindrique 7 et comporte, sur sa partie radiale, une découpe 8 et à chaque bord, un crochet, respectivement 9 et 10, dont la face interne comporte une gorge, respectivement 11 et 12. Comme également visible sur la figure 3, la partie du tambour 2 correspondant à l'aubage mobile considéré comporte, sur sa surface extérieure, deux bourrelets annulaires, longitudinalement espacés, respectivement 13 et 14. Le bourrelet amont 13 comporte une gorge annulaire 15, ouverte vers l'aval. Le bourrelet aval 14 comporte à sa base une portée cylindrique 16 et une gorge annulaire 17 orientée radialement et porte également une collerette cylindrique 18 sur laquelle sont formées des languettes 19 régulièrement espacées.

Le montage et la fixation des aubes 1 sur le tambour 2 de rotor ainsi définis sont effectués de la manière suivante. On dispose tout d'abord, sur la face radialement inférieure de la gorge 15 du bourrelet amont 13 du tambour 2 ainsi que sur la portée cylindrique 16 du bourrelet aval 14 dudit tambour 2, des cales en forme de plaquettes élastiques ondulées, respectivement 20 et 21. On introduit alors simultanément le rebord 6 de la jambe amont 4 de la plate-forme 3 d'aube dans la gorge 15 du bourrelet amont 13 du tambour 2 et les languettes 19 du bourrelet aval 14 du tambour 2 dans la découpe 8 de la jambe aval 5 de la plate-forme 3 d'aube. Une légère pression est exercée lors du montage sur lesdites cales 20 et 21 qui évitent le cliquetis des aubes lorsque le rotor tourne en autorotation, à faible vitesse. Le montage se poursuit par la mise en place de plaquettes 22 de verrouillage, en forme de segment circulaire, dont un exemple est représenté sur la figure 4. Chaque plaquette 22 présente sur son bord externe, deux languettes longues 23 et 24 et en position intermédiaire, deux languettes 25 et 26 plus larges et plus courtes que les précédentes, séparées par une découpe 27. Avant montage, la languette 23 est repliée à angle droit par rapport au corps de la plaquette. La plaquette 22 est introduite en biais dans la gorge 17 du tambour, tout en présentant la découpe 27 en face de la languette 19 puis elle est redressée pour l'amener en contact avec la face aval de la jambe 5 de plate-forme et on fait coulisser la plaquette 22 pour faire pénétrer les languettes 25 et 26 dans les gorges 11 et 12 des crochets 9 et 10 de la jambe aval 5 de plate-forme d'aube. La plaquette 22 est poussée jusqu'à ce que la languette 24 vienne en butée sur ledit crochet 9 et on redresse, à ce moment, la languette 23. On obtient ainsi le rotor de turbomachine assemblé, conforme à l'invention, tel que représenté sur la figure 1.

De la manière ainsi décrite, le verrouillage radial de l'aube est assuré par les languettes 19 du tambour côté aval, le bourrelet amont 13 participant également à la rétention. Le verrouillage axial des aubes est assuré par les plaquettes 22, le bourrelet amont 13 participant toujours au blocage axial dans un sens. Le verrouillage périphérique des aubes est assuré par les languettes 23 et 24 desdites plaquettes 22.

## Revendications

1. Rotor de turbomachine constitué d'un tambour (2) comportant au moins deux bourrelets (13,14) extérieurs annulaires formant des moyens de fixation d'aubes (1) pendant que chaque plate-forme (3) d'aube (1) comporte sur sa face inférieure une jambe amont (4) dont le rebord (6) d'extrémité coopère avec une gorge annulaire (15) ménagée dans ledit bourrelet amont (13), caractérisé en ce qu'une jambe aval (5) terminée par une portée cylindrique (7) en appui sur une portée cylindrique (16) coopérante ménagée sur le tambour (2) et comportant, d'une part, une découpe médiane (8) coopérant avec une languette (19) formée sur une collerette (18) portée par ledit bourrelet aval (14) et, d'autre part, deux crochets (9,10) sur la face interne desquels est ménagée une gorge (11,12) recevant chacune une première languette (25,26) d'une plaquette (22) de verrouillage en forme de segment circulaire, portant à chaque extrémité une seconde languette (23, 24) de blocage et dont la base est placée dans une gorge annulaire (17) ménagée du côté aval (14) du tambour (2).

2. Rotor de turbomachine selon la revendication 1 dans lequel une cale élastique (20,21) ondulée est placée perspectivement, d'une part, entre le rebord (6) de la jambe amont (4) de la plate-forme (3) d'aube et la face radialement inférieure de la gorge (15) du bourrelet amont (13) du tambour (2) et, d'autre part, entre les portées cylindriques (7, 16) coopérantes de la jambe aval (5) de la plate-forme (3) d'aube et du bourrelet aval (14) du tambour (2).

## Patentansprüche

1. Turbomaschinen-Rotor, bestehend aus einer Trommel (2) mit wenigstens zwei ringförmigen äußeren Wülsten (13, 14), die Mittel zur Befestigung von Schaufeln (1) bilden, wobei jede Schaufelplattform (3) an ihrer Unterseite einen stromaufwärtigen Schenkel (4) aufweist, dessen endseitige Randleiste (6) mit einer in dem stromaufwärtigen Wulst (13) angebrachten ringförmigen Kehle (15) zusammenwirkt, dadurch gekennzeichnet, daß jede Schaufelplattform einen stromabwärtigen Schenkel (5) aufweist, der in einer zylindrischen Tragfläche (7) endet, die sich gegen eine mit ihr zusammenwirkende, an der Trommel (2) angebrachte zylindrische Tragfläche (16) abstützt, und daß der genannte stromabwärtige Schenkel (5) einerseits eine in seinem mittleren Bereich liegende, mit einer an einem von dem stromabwärtigen Wulst (14) getragenen Kragen ausgebildeten Zunge (19) zusammenwirkende Aussparung (8) und andererseits zwei Haken (9, 10) besitzt, auf deren Innenseite jeweils eine Kehle (11, 12) ausgebildet ist, wobei jede dieser Kehlen (11, 12) eine erste Zunge (25, 26) einer Verriegelungsplatte (22) in Form eines Kreissegments aufnimmt, die in jedem Endbereich eine zweite Blockierzunge (23, 24) trägt und deren Basis in einer auf der stromabwärtigen Seite (14) der Trommel (2) angebrachten ringförmigen Kehle (17) angeordnet ist.

2. Turbomaschinen-Rotor nach Anspruch 1, bei dem einerseits zwischen der Randleiste (6) des stromaufwärtigen Schenkels (4) der Schaufelplattform (3) und der radial unteren Seite der Kehle 15) des stromaufwärtigen Wulstes (13) der Trommel (2) und andererseits zwischen den zusammenwirkenden zylindrischen Tragflächen (7, 16) des stromabwärtigen Schenkels (5) der Schaufelplattform (3) und des stromabwärtigen Wulstes (14) der Trommel (2) jeweils eine gewellte elastische Beilage (20, 21) angeordnet ist.

## Claims

1. Turbo-machine rotor consisting of a drum (2) having at least two annular outer flanges (13, 14) forming means for fastening blades (1), whilst each blade platform (3) has, on its lower face, an upstream leg (4), the end edge (6) of which interacts with an annular throat (15) formed in the said upstream flange (13), characterised in that a downstream leg (5), terminating in a cylindrical bearing surface (7), bears on an interacting cylindrical bearing surface (16) formed on the drum (2) and has, on the one hand, a central cutout (8) interacting with a tongue (19) formed on a collar (18) carried by the said downstream flange (14) and, on the other hand, two hooks (9,10) on the inner face of which is formed a throat (11, 12), each receiving a first tongue (25, 26) of a locking bar (22) in the shape of a circular segment, carrying at each end a second immobilising tongue (23, 24) and the base of which is placed in an annular throat (17) formed on the downstream side (14) of the drum (2).

2. Turbo-machine rotor according to Claim 1, in which an undulated resilient shim (20, 21) is placed respectively, on the one hand, between the edge (6) of the upstream leg (4) of the blade platform (3) and the radially lower face of the throat (15) of the upstream flange (13) of the drum (2) and, on the other hand, between the interacting cylindrical bearing surfaces (7, 16) of the downstream leg (5) of the blade platform (3) and the downstream flange (14) of the drum (2).

FIG : 1

FIG : 2

FIG : 3

FIG : 4